# EUROPEAN PATENT SPECIFICATION

(11) **EP 0 613 073 B1**
(45) Date of publication and mention of the grant of the patent: **13.06.2001**
(21) Application number: 93306468.5
(22) Date of filing: 17.08.1993
(51) Int. Cl.: G06F 1/00

(54) **Licence management mechanism for a computer system**
Lizenzverwaltungsvorrichtung für ein Computersystem
Dispositif de gestion de licences pour un système d'ordinateur

(30) Priority: 23.02.1993 GB 9303595
(43) Date of publication of application: 31.08.1994
(73) Proprietor: INTERNATIONAL COMPUTERS LIMITED, Putney, London, SW15 1SW (GB)
(72) Inventor: Archer, Barrie, Wokingham, Berkshire RG11 3BA (GB)
(74) Representative: Guyatt, Derek Charles

(56) References cited:
- EP-A- 0 191 162
- US-A- 4 924 378
- PTR PHILIPS TELECOMMUNICATION AND DATA SYSTEMS REVIEW, vol. 47, no. 3 , September 1989 , HILVERSUM, NL; pages 1 - 19 R.C.FERREIRA 'The Smart Card: A High Security Tool in EDP'

## Description

### Background to the invention

This invention relates to a license management mechanism for a computer system, for controlling use of licensed software.

Software is normally licensed rather than sold in order that restrictions on unauthorised use can be legally enforced. Various schemes have been tried to make the software enforce these restrictions itself, including copy protection, hardware keys, etc., but the current trend is to the use of license keys that are packets of data which permit the software to work only on a particular machine.

One way in which this has been implemented is through the provision of a mechanism referred to as a license manager to which the handling of these license keys is delegated. By centralising the handling of the license keys it is possible to restrict the use of software not just to a single machine but to a network of machines. This provides additional flexibility for the user as well as providing the potential for more sophisticated control over the use of the software within a user organisation.

Central to the use of license managers to control the use of software in this way is the ability to identify which machine the license manager is running on. If this were not done it would be possible to obtain license keys for use on one machine and use them on any number of machines. Various schemes have been used to achieve this identification, including serial numbers built into the machine processor, use of Ethernet DTE addresses, etc.

US-A-4924378 describes a licence storage key, for securely storing information about what licences are available. The licence storage key is connected to an external mouse/keyboard port. Before an application program can be run, it accesses a licence management daemon, which in turn accesses the licence storage key to have a licence assigned. Also, while the application program is running, it periodically checks with the daemon, to ensure that a licence is still assigned to it. This ensures that if the user removes the key while a program is running, the right to run that program is lost. However, a problem with this is that the licence storage key is a relatively complex device, capable of securely storing a number of licences, one for each program.

The object of the present invention is to provide a novel licence management mechanism for a computer system, whereby this problem is avoided.

### Summary of the invention

According to the invention there is provided a computer system comprising:
(a) a host computer;
(b) a security device removably coupled to an external port of the host computer; and
(c) a licence manager, running within the host computer, the licence manager including means for responding to requests from application programs by checking whether those application programs are licensed and, if so, granting permission for those application programs to run;
characterised in that
(d) the security device contains a host identity;
(e) the licence manager uses a licence table, stored within the memory of the host computer, for checking whether application programs are licensed; and
(f) the licence manager includes means for periodically interrogating the security device, to obtain said host identity, and for withdrawing permission for application programs to run if the host identity does not match an expected identity value held in the licence manager.

### Brief description of the drawings

Figure 1 is a block diagram of a computer system embodying the invention.

Figure 2 is a flow chart showing the operation of a licence manager in response to a request to use a feature.

Figure 3 is a flow chart showing a host identity checking function performed by the license manager.

### Description of an embodiment of the invention

One embodiment of the invention will now be described by way of example with reference to the accompanying drawing.

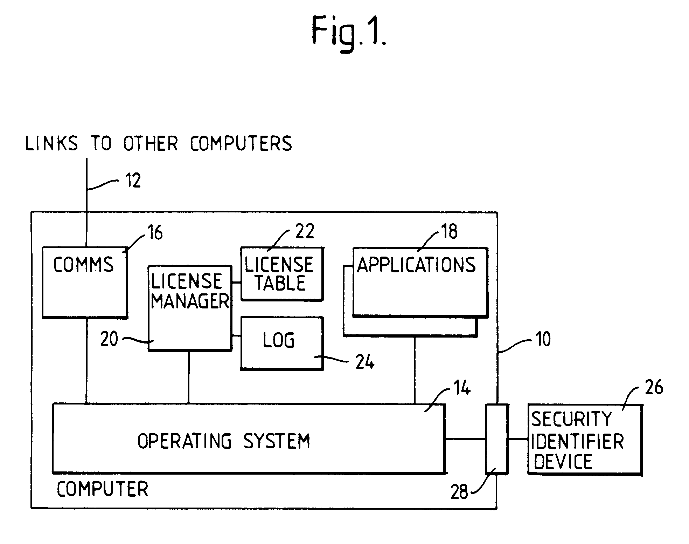

Referring to Figure 1, the system comprises a number of computers 10, linked together by means of communications links 12 to form a data processing network.

Each of the computers runs an operating system 14 which controls and coordinates the operation of the computer, and communications software 16 which allows the computer to communicate with the other computers in the system over the links 12. Each computer also runs a number of applications 18 (where an application is any logical software entity).

At least one of the computers runs a program referred to herein as the license manager (LM) 20. The function of the LM is to regulate the applications within a particular domain, so that each application can be used only to the extent permitted by licenses granted to the system owner. The domain comprises those applications that can communicate with the LM. In this example, the domain extends over a multi-computer network, but in other examples it could consist of a single computer.

Each application has a number of features associated with it. A "feature" is defined herein as an aspect of an application that is subject to license control by the LM. A feature may, for example, simply be the invocation of the application by a user. However, more complex features may be defined such as number of users, number of communication links and database size.

Each application also has an application key associated to it, which is unique to the application. As will be described, application keys are used to ensure security of communication between the applications and the LM.

The LM has a private area of memory in which it maintains a license table 22 and a log 24.

The license table holds a number of license keys that have been issued for this system. Each license key contains the following package of information:-
Machine identifier: the identity of the computer on which the license manager is permitted to run.
Expiry date: the date until which the license key is valid.
Limit: the number of units of a particular feature that are licensed (eg the number of users, number of communication links, or database size).
Application key: the key value of the application to which the license key relates.
Signature: a cryptographic signature which ensures that the license key cannot be changed without detection.

Whenever one of the applications requires to use a feature, it sends a request message to the LM. The request message includes:
- the identity of the feature required
- the number of units of the feature required
- the application key
- a timestamp value.

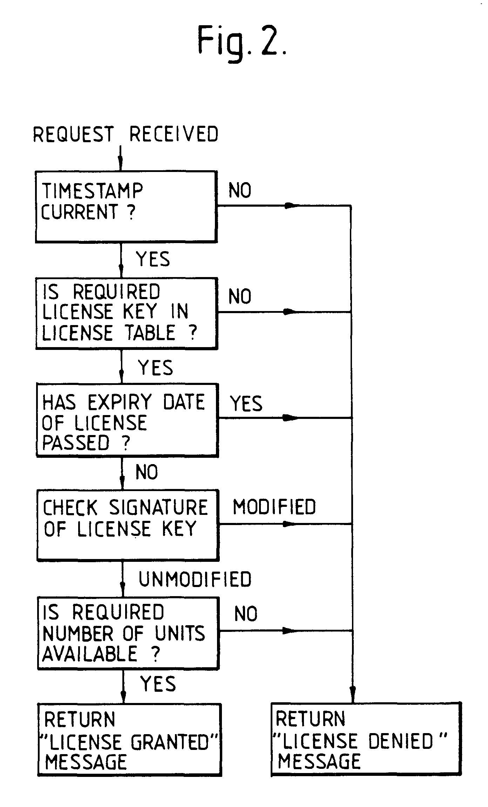

Referring to Figure 2, when the LM receives this request message, it checks that the timestamp value is current. Assuming the timestamp value is current, the LM then checks whether there is a license key in the license table for the required feature.

If there is a license key in the table, the LM then checks whether the expiry date of the license has passed, and checks the signature of the license key to ensure that it has not been modified. The LM also checks whether the required number of units are available for the feature (ie whether the number of requested units plus the number of units already granted is less than or equal to the limit value in the license key).

If all these checks are satisfactory, the LM returns a "license granted" message to the application, sealed under the application key. The LM keeps a record of the number of units granted for each feature. If, on the other hand, any of the checks fails, the LM returns a "license denied" message to the application. The LM also writes a record in the log 24 to indicate whether a license has been granted or denied.

If the application receives a "license granted" message, it proceeds to use the requested features as required. If, on the other hand, it receives a "license denied" message, it performs one of the following actions, as determined by the designer of the application:
- the application may simply shut itself down.
- in the case where the license was denied because there were not enough units of the requested feature available, the application may display a "call again later" message to the user.
- the application may continue running in a reduced service mode eg a demonstration mode.

When an application terminates, it sends a "license relinquish" message to the LM. The LM will then withdraw any licenses issued to this application, making the units available to other applications.

Each application is required to send a revalidation message periodically to the LM, to re-validate its license. For example, a revalidation message may be required every 5 minutes. If the application does not receive any response to this message, it assumes that it has lost contact with the LM, and shuts down or continues in a reduced service mode.

The LM periodically checks whether it has received revalidation messages from all the application to which it has granted licenses. If a revalidation message has not been received from an application, the LM assumes that the application has failed, and therefore withdraws the license, making the units available to other applications.

In order to ensure that unauthorised copies of the LM cannot be run on other systems, it is necessary to provide a way of identifying the machine on which the LM runs. This is achieved by means of a security identification device (SID) 26, which stores an identifier unique to this device, referred to as the secure host identifier. The SID is attached to the computer 10 by way of an external port 28. In this example, the port is a standard parallel printer port, and the SID is designed so that a printer may be plugged into the back of the SID, so that both the printer and SID share the same port. Messages for the SID are identified by special commands.

In other embodiments of the invention, the SID may be attached to a special dedicated port, or to some other type of standard port. The port may be serial rather than parallel.

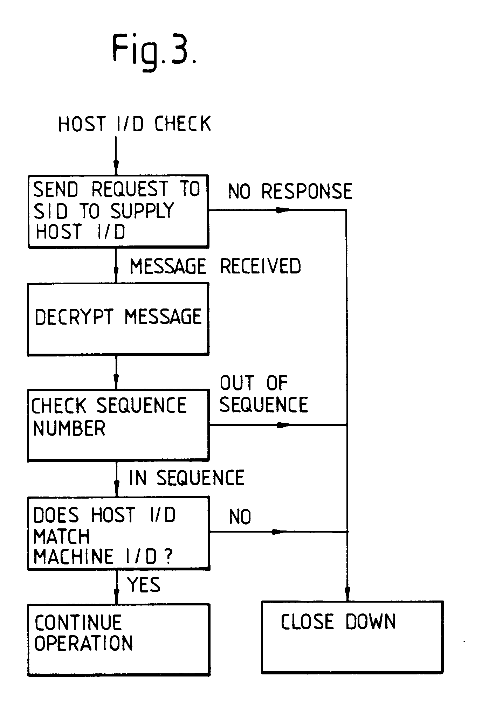

Referring to Figure 3, in order to check the host identity, the LM sends a request message to the SID at regular intervals, requesting it to supply the secure host identifier.

The SID responds to this by returning a message encrypted under a key known only to the SID and the LM.

The message contains:
- the secure host identifier
- a sequence number, which is incremented each time the SID returns a message.

When the LM receives this message, it decrypts it, and checks the sequence number to ensure that it is the next expected sequential value. This ensures that it is not possible to replace the SID by a program which intercepts the requests from the LM and returns a copy of the SID's response, or which passes the request to a SID on another system.

The LM then checks whether the returned secure host identifier matches the machine identifiers of the license keys held in the license table 22.

If the LM does not receive any response to a request to the SID, or if the response does not contain the correct sequence number, or if the secure host identifier does not match the machine identifiers in the license keys, the LM closes down. This means that the LM will not issue any more licenses to applications. Also, because the LM will not now respond to the revalidation message from the application, any outstanding licenses are effectively cancelled.

In summary, it can be seen that the LM will issue licenses, permitting applications to operate, only if a security identification device SID is connected to the computer, and if the machine identifiers in the individual license keys issued to the LM match the secure host identifier held in the SID.

It should be noted that the LM can grant licenses to applications running in any of the computers 10 in the network, not just to applications running in the same computer as the LM. The number of licenses that may be granted is restricted by the limit in the license keys. Thus, for example, if a license key sets a limit on the number of users, then the total number of users of a particular application in the network cannot exceed this limit.

The use of the device for the provision of the identifier to the license manager has several very important advantages:
- if the machine to which the device is attached fails, the device can be transferred to another machine (new keys are not required)
- the supplier of the device can retain title to the device, so in the event of the machine being sold the device has to be returned to the supplier.
   Hence all software on the machine that would only work with a license manager will no longer function as required by the terms of supply of the software which is licensed to a legal entity not to a machine.
- if the user of the software wishes to change the license he has to reduce its capability, the device can be replaced and new keys issued. Current schemes do not provide for the secure revocation of the keys.
- the device can be used to provide secure identification on standard hardware platforms which do not inherently provide such a facility, and hence can enable the use of license management on such hardware.

It should be noted that although the embodiment of the invention described above is a multi-computer system, the invention is equally applicable to single processor systems, or to multi-nodal systems, comprising a plurality of multi-processor nodes.

## Claims

1. A computer system comprising:
(a) a host computer (10);
(b) a security device (26) removably coupled to an external port of the host computer; and
(c) a licence manager (20), running within the host computer, the licence manager including means for responding to requests from application programs by checking whether those application programs are licensed and, if so, granting permission for those application programs to run;
characterised in that
(d) the security device contains a host identity;
(e) the licence manager uses a licence table (22), stored within the memory of the host computer, for checking whether application programs are licensed; and
(f) the licence manager includes means for periodically interrogating the security device, to obtain said host identity, and for withdrawing permission for application programs to run if the host identity does not match an expected identity value held in the licence manager.

2. A system according to Claim 1 wherein communication of the host identity between the security identification device and the licence manager is protected by encryption.

3. A system according to Claim 2 wherein said host identity returned by the security identification device is encrypted together with a sequence number which is incremented each time said host identity is returned.

4. A system according to any preceding claim wherein the licence manager regulates the usage of software items within a network of computers.

## Patentansprüche

1. Rechnersystem mit
a) einem Host-Rechner (10),
b) einer Sicherheitsvorrichtung (26), die lösbar mit einem externen Anschluss des Host-Rechners gekoppelt ist, und
c) einem Lizenz-Manager (20), der im Host-Rechner läuft und der eine Vorrichtung aufweist, die auf Anfragen von den Anwendungsprogrammen anspricht, und die prüft, ob die Anwendungsprogramme lizenziert sind, und, wenn dies bejaht wird, die Genehmigung erteilt, diese Anwendungsprogramme in Lauf zu setzen,
**dadurch gekennzeichnet,** dass
d) die Sicherheitsvorrichtung eine Host-Identität enthält,
e) der Lizenz-Manager eine Lizenz-Tabelle (22) verwendet, die in dem Speicher des Host-Rechners gespeichert ist, und die prüft, ob Anwendungsprogramme lizenziert sind, und
f) der Lizenz-Manager eine Vorrichtung zum periodischen Abfragen der Sicherheitsvorrichtung aufweist, um die Host-Identität zu erzielen, und um die Genehmigung für das Ablaufen der Anwendungsprogramme zurückzuziehen, wenn die Host-Identität nicht mit einem erwarteten Identitätswert übereinstimmt, der im Lizenz-Manager enthalten ist.

2. System nach Anspruch 1, bei dem eine Verbindung der Host-Identität zwischen der Sicherheits-ldentifiziervorrichtung und dem Lizenz-Manager durch Geheimverschlüsselung geschützt ist.

3. System nach Anspruch 2, bei dem die Host-Identität, die durch die Sicherheits-Identifiziervorrichtung zurückgeführt wird, zusammen mit einer Folgezahl verschlüsselt ist, die jedesmal, wenn die Host-Identität zurückgeführt wird, um einen Schritt weitergeschaltet wird.

4. System nach einem der vorausgehenden Ansprüche, bei dem der Lizenz-Manager die Verwendung von Software-Datensätzen innerhalb eines Netzwerkes von Rechnern regelt.

## Revendications

1. Système d'ordinateur(s) comprenant :
(a) un ordinateur hôte (10) ;
(b) un dispositif de sécurité (26) couplé, de façon à pouvoir en être retiré, à un port d'accès externe de l'ordinateur hôte ; et
(c) un gestionnaire de licences (20), s'exécutant à l'intérieur de l'ordinateur hôte, le gestionnaire de licences comportant un moyen destiné à répondre à des demandes émanant de programmes d'application en vérifiant si ces programmes d'application sont ou non sous licence et, s'il en est ainsi, permettant d'accorder la permission d'exécuter ces programmes d'application ;
caractérisé en ce que :
(d) le dispositif de sécurité contient une identité d'hôte ;
(e) le gestionnaire de licences utilise une table de licences (22) stockée à l'intérieur de la mémoire de l'ordinateur hôte, afin de vérifier si les programmes d'application sont ou non sous licence ; et
(f) le gestionnaire de licence comporte un moyen servant à interroger périodiquement le dispositif de sécurité, afin d'obtenir ladite identité d'hôte, et à retirer la permission d'exécuter des programmes d'application si l'identité d'hôte ne concorde pas avec une valeur d'identité attendue, qui est contenue dans le gestionnaire de licences.

2. Système selon la revendication 1, où la communication de l'identité d'hôte entre le dispositif d'identification de sécurité et le gestionnaire de licences est protégé par cryptage.

3. Système selon la revendication 2, où ladite identité d'hôte, renvoyée par le dispositif d'identification de sécurité, est cryptée en même temps qu'un numéro de séquence, qui est incrémenté à chaque fois que ladite identité d'hôte est renvoyée.

4. Système selon l'une quelconque des revendications précédentes, où le gestionnaire de licences régule l'usage d'éléments logiciels à l'intérieur d'un réseau d'ordinateurs.
